# EUROPÄISCHE PATENTSCHRIFT

(11) **EP 3 610 307 B1**
(45) Veröffentlichungstag und Bekanntmachung des Hinweises auf die Patenterteilung: **02.06.2021**
(21) Anmeldenummer: 18719745.4
(22) Anmeldetag: 09.04.2018
(51) Int. Cl.: G02B 13/04, G02B 27/10, G02B 13/06, H04N 5/225, G02B 3/00, G02B 19/00

(54) **MONOZENTRISCHE EMPFANGSANORDNUNG**
MONOCENTRIC RECEPTION ARRANGEMENT
DISPOSITIF DE RÉCEPTION MONOCENTRIQUE

(30) Priorität: 10.04.2017 DE 102017107615
(43) Veröffentlichungstag der Anmeldung: 19.02.2020
(73) Patentinhaber: JENOPTIK Optical Systems GmbH, 07745 Jena (DE)
(72) Erfinder: SCHALLER, Uwe, 07768 Kahla (DE)
(74) Vertreter: Schaller, Renate
(86) Internationale Anmeldenummer: PCT/DE2018/100318
(87) Internationale Veröffentlichungsnummer: WO 2018/188693

(56) Entgegenhaltungen:
- CN-A- 105 549 183
- US-A1- 2011 211 106
- US-A1- 2013 076 900
- US-B1- 8 928 988

## Beschreibung

Die Erfindung betrifft eine monozentrische Empfangsanordnung, wie sie gattungsgemäß aus der DE 602 00 370 T2 bekannt ist.

Aus dem Stand der Technik sind eine Vielzahl von monozentrischen (auch konzentrisch genannten) Empfangsanordnungen mit einem optoelektronischen Empfängerarray, insbesondere einem sphärisch gekrümmten Empfängerarray, bekannt. Derartige Empfangsanordnungen zeichnen sich dadurch aus, dass sie Licht aus einem sehr großen Objektbereich (auch Objektfeld, Beobachtungsfeld, Scanfeld oder Sichtfeld genannt) in eine sphärisch gekrümmte (sphärische) Fokusebene abbilden, weshalb sie auch als Ultraweitwinkel-Empfangsanordnungen bezeichnet werden. Aus dem Objektbereich kommende Teilstrahlenbündel, die jeweils die durch die Eintrittspupille der Empfangsanordnung eintretenden parallelen Strahlen einer Richtung umfassen und deren Hauptstrahl durch den Mittelpunkt der Eintrittspupille verläuft, werden in einen Brennpunkt abgebildet, der auf einer sphärischen Fokusebene liegt. Der Krümmungsmittelpunkt der sphärischen Fokusebene liegt ebenso wie der Krümmungsmittelpunkt aller in Strahleinfallsrichtung vorgeordneten optisch wirksamen Flächen des optischen Systems in einem gemeinsamen Punkt, weshalb ein solches optisches System als monozentrisch bezeichnet wird. Bei den aus dem Stand der Technik bekannten Empfangsanordnungen dieser Art sind entweder in der sphärischen Fokusebene oder in einer hierzu konjugierten ebenfalls sphärischen Ebene ein großes das gesamte Bildfeld überdeckendes Empfängerarray angeordnet, auf dem ein reelles Gesamtbild des Objektbereiches abgebildet wird, oder mehrere Empfängerarrays (CCD-Matrix, Pixelarray) angeordnet, auf denen jeweils reelle Teilbilder des Gesamtbildes entstehen.

Aus der EP 1 290 483 B1 ist ein konzentrisches Sensorsystem mit Ultraweitwinkel-Blickfeld bekannt, was im Sinne der Erfindung eine monozentrische Empfangsanordnung darstellt. Durch eine Eintrittspupille, die in einer Ebene des gemeinsamen Krümmungsmittelpunktes aller optisch wirksamen Flächen angeordnet ist, treten Teilstrahlenbündel aus unterschiedlichen Einfallsrichtungen und werden in eine sphärische Fokusebene fokussiert, die hinter der letzten optisch wirksamen Fläche liegt. In einer ersten Ausführung ist hier eine gepixelte Sensorfläche angeordnet, sodass auf dieser ein reelles Bild entsteht.

In einer zweiten Ausführung sind in der sphärischen Fokusebene die Eintrittsflächen eines gekrümmten faseroptischen Übertragers angeordnet, die das Licht zu einer Bildverstärkerröhre leiten, wo die Signale für eine nachfolgende Betrachtung verstärkt werden.

In der vorgenannten DE 602 00 370 T2 ist ein konzentrisches Ultraweitwinkel-Scannersystem mit stückweise flacher Detektoranordnung offenbart, die ebenfalls eine monozentrische Empfangsanordnung darstellt. Im Unterschied zu einem bis dato genutzten, in einer sphärischen Fokusebene angeordneten sphärisch gekrümmten Empfängerarray soll hier ein Empfängerarray einsetzbar sein, das stückweise aus einer flachen Sensorchipanordnung (Teilarray) besteht. Die Teilarrays liegen dann jeweils in einer zu einer sphärischen Ebene tangentialen Ebene.

Aus der US 8 928 988 B1 ist ein optisches Abbildungssystem mit einer monozentrischen Primäroptik und einem sekundären Optikmodul bekannt. Das sekundäre Optikmodul bildet eine Vielzahl von einzelnen Abbildungskanälen, über die jeweils ein Teil des über die monozentrische Primäroptik einfallenden Lichtes auf einen nachgeordneten Empfänger abgebildet wird. Um ein vollständiges Bild zu erzeugen, müssen die in der Bildebene angeordneten Empfänger lückenlos aneinander grenzen, was praktisch nur sehr schwer möglich ist.

Weitere gattungsgleiche monozentrische Empfangsanordnungen, mit denen jeweils ein reelles Gesamtbild oder reelle Teilbilder eines Objektbereiches erzeugt werden, sind aus der US 5 012 081 A, der US 8 830 377 B2 und der US 9 329 365 B2 bekannt.

Durch die Verwendung eines Empfängerarrays wird grundsätzlich das Bildfeld in die Empfängerflächen der einzelnen Empfänger strukturiert, sodass es bei der Abbildung des Lichtes, bedingt durch die Strukturierung, zu Informations- und Energieverlust kommt, wenn die Empfängerflächen die sphärische Fokusebene nicht lückenlos bedecken. Für die abbildenden Empfangsanordnungen des Standes der Technik werden insbesondere CCD-Matrizen verwendet. Die Empfängerflächen (Pixel) von CCD-Matrizen werden über eine Integrationszeit zeitgleich belichtet und anschließend reihenweise ausgelesen, weshalb ein Energieverlust durch eine längere Integrationszeit ausgeglichen werden kann. Bei den gattungsgleichen Empfangsanordnungen des Standes der Technik werden des Weiteren verschiedenste konstruktive Maßnahmen getroffen, um zur Vermeidung von Informations- und Energieverlust eine hohe Abbildungsqualität zu erreichen, die z. B. in der Verwendung mehrerer Linsen unterschiedlicher Materialien bestehen, womit die Empfangsanordnungen aufwendig und kostenintensiv werden.

Zur Detektion von einzelnen Lichtpulsen unter gleichzeitiger Vermeidung der Detektion von Umgebungslicht sind CCD-Matrizen und andere optische Bildsensoren, bei denen die einzelnen Empfänger (Pixel) zeitgleich belichtet und anschließend nacheinander ausgelesen werden, nicht geeignet. Darüber hinaus kann bei einer Detektion eines einzelnen Lichtpulses ein Energieverlust nicht über eine längere Integrationszeit des Empfängers ausgeglichen werden. Um mit der Empfangsanordnung auch kurze Lichtpulse bzw. schwache Lichtpulse detektieren zu können, muss ein Energieverlust bei der Übertragung des Lichtpulses auf das Empfängerarray vermieden werden.

Die Lichtpulse können z. B. von einem sich im Objektbereich befindenden Sender kommen oder von einem Laserscanner kommende und im Objektbereich reflektierte Laserpulse sein.

Die Aufgabe der Erfindung besteht darin, eine monozentrische Empfangsanordnung so zu verbessern, dass sie mit einem Empfängerarray zeitgleich oder nacheinander aus einem Objektbereich ankommende Lichtpulse ohne Informations- oder Energieverlust, bedingt durch die Strukturierung des Empfängerarrays, detektiert.

Diese Aufgabe wird für eine Empfangsanordnung gemäß Anspruch 1 gelöst.

Vorteilhafte Ausführungen sind in den Unteransprüchen 2 bis 9 angegeben.

Mit einer erfindungsgemäßen Empfangsanordnung ist es möglich, aus einem großen Objektbereich ankommende einzelne Lichtpulse quasi verlustfrei auf die einzelnen Empfänger eines optoelektronischen Empfängerarrays zu übertragen. Dabei wird ein jedes durch die Empfangsanordnung hindurchtretendes Teilstrahlenbündel eines Lichtpulses auf genau einen Empfänger des optoelektronischen Empfängerarrays geleitet und bewirkt dort eine vollständige Ausleuchtung der Empfängerfläche des jeweiligen Empfängers.

Es ist erfindungswesentlich, dass die Empfangsanordnung eine Vielzahl von Empfangskanälen umfasst, die im optischen Sinne jeweils ein Teleskop mit einem in der Aperturblende stehenden, nachgeordneten Empfänger darstellen. Dieses Teleskop fokussiert das aus einem Teilbereich des Objektbereichs kommende Licht der Teilstrahlenbündel jeweils in einen Brennpunkt und kollimiert es anschließend auf den Empfänger, sodass der Empfänger mit parallelem Licht bestrahlt wird.

Der Objektbereich stellt den Raumwinkelbereich dar, aus dem ankommende Lichtpulse von der Empfangsanordnung empfangen werden können. Er wird durch einen horizontalen und einen vertikalen Öffnungswinkel der Empfangsanordnung definiert, wobei der horizontale Öffnungswinkel z. B. 90° und der vertikale Öffnungswinkel z. B. 20° sein kann.

Das Prinzip der Empfangsanordnung lässt eine Skalierung des horizontalen und vertikalen Öffnungswinkels jeweils auf bis zu 180° zu.

Die Empfangsanordnung enthält grundsätzlich ein monozentrisches optisches System mit einer sphärischen Eintrittsfläche, deren Krümmungsmittelpunkt in der Ebene einer abgebildeten Eintrittspupille der Empfangsanordnung liegt. Teilstrahlenbündel im Sinne dieser Beschreibung stellen jeweils ein durch die Eintrittspupille begrenztes Bündel paralleler Strahlen dar, die aus dem Objektbereich kommen und jeweils einen Achsstrahl aufweisen, der durch den Krümmungsmittelpunkt der sphärischen Eintrittsfläche verläuft.

Gleich dem Stand der Technik werden die Teilstrahlenbündel jeweils auf einer sphärischen Fokusebene fokussiert. Im Unterschied zum Stand der Technik ist jedoch in der sphärischen Fokusebene weder mindestens ein Empfängerarray angeordnet, noch wird diese auf wenigstens einem Empfängerarray abgebildet. Hier ist lediglich ein Feldlinsenarray angeordnet. Während die mittig jeweils auf eine Feldlinse des Feldlinsenarrays fokussierten Teilstrahlenbündel unbeeinflusst die Feldlinse passieren, werden die Teilstrahlenbündel, die stärker zum Rand der Feldlinsen hin fokussiert werden, zur optischen Achse der Feldlinse hin gebrochen, womit die Feldlinsen, ohne dabei optisch für die fokussierten Teilstrahlenbündel abbildend zu wirken, jeweils einen Empfangskanal scharf begrenzen, in dem die aus einem Teilbereich des Objektbereiches kommenden Teilstrahlen geführt werden. Die Empfangskanäle sind jeweils durch das optische System mit einer der daran ausgebildeten Feldlinsen des Feldlinsenarrays, einer Kollimatorlinse eines Kollimatorarrays, die auch durch eine Linsengruppe gebildet sein kann, und einem einzelnen Empfänger des optoelektronischen Empfängerarrays gebildet. Da die Feldlinsen jeweils den Querschnitt eines Empfangskanals begrenzen, werden die hindurchtretenden Teilstrahlenbündel gesichert auch jeweils nur auf den nachgeordneten Empfänger geleitet, auch wenn die nachgeordnete Kollimatorlinse und die Empfängerfläche des Empfängers mit ihrem Durchmesser kleiner der Ausdehnung der Feldlinse ausgeführt sind, um sie nahe der Feldlinse anzuordnen. Die Feldlinsen können eine beliebige netzbildende Geometrie aufweisen, um die sphärische Fokusebene und damit das Bildfeld des abgebildeten Objektbereichs lückenlos abzudecken. Dadurch kann trotz einer Strukturierung des Bildfeldes in die Empfängerflächen der einzelnen Empfänger kein Informations- bzw. Energieverlust entstehen.

Über jeden einzelnen Empfangskanal werden die Teilstrahlenbündel aus jeweils einem Teilbereich des Objektbereiches empfangen. Die Teilbereiche können z. B. einem Ausschnitt des Objektbereiches von 5° x 5° entsprechen und sind durch die Größe der Feldlinsen bestimmt, die lückenlos und ohne Überlappung aneinandergrenzend in der sphärischen Fokusebene angeordnet sind. Wie viel Strahlungsintensität jeweils aus den Teilbereichen auf eine Empfängerfläche geführt wird, wird primär über die Wahl der Empfänger und damit der Größe der Empfängerfläche entschieden, da deren Begrenzung jeweils die Aperturblende eines Empfangskanals verkörpert. Die Aperturblende eines jeden Empfangskanals wird über die jeweils zugeordnete Kollimatorlinse und die jeweils zugeordnete Feldlinse jeweils in eine Ebene, in der der gemeinsame Krümmungsmittelpunkt des optischen Systems liegt, als Eintrittspupille abgebildet. Der Abbildungsmaßstab zwischen der durch die Größe der Empfängerfläche bestimmten Aperturblende und der Eintrittspupille bestimmt die Größe der Eintrittspupille und damit die Öffnung eines jeden Empfangskanals, durch den die Teilstrahlenbündel auf den jeweiligen Empfänger gelangen. Daraus ergibt sich, dass bei einer unterschiedlichen Dimensionierung der Empfangskanäle, insbesondere bei unterschiedlich großen Aperturblenden, aufgrund unterschiedlich großer Empfängerflächen, die Eintrittspupille für die unterschiedlichen Empfangskanäle unterschiedlich groß wäre. Das könnte von Interesse sein, wenn die Strahlungsintensität im Objektfeld lokal nicht unerheblich unterschiedlich ist und dieser Unterschied bekannt ist. In der Regel ist der Abbildungsmaßstab der Empfangskanäle jedoch gleich, weshalb auch zur Vereinfachung der Beschreibung der Erfindung davon ausgegangen wird, dass die Empfangskanäle und damit auch die Empfängerflächen gleich dimensioniert sind, weshalb von gleich großen Eintrittspupillen ausgegangen wird, die vereinfacht betrachtet zu einer Eintrittspupille der Empfangsanordnung zusammenfallen. Unabhängig davon, ob die Eintrittspupille für die einzelnen Empfangskanäle unterschiedlich groß oder gleich groß ist, trifft jedes Teilstrahlenbündel jeweils eines Teilbereiches mit einem gleichen Strahlquerschnitt auf einen der Empfänger und füllt seine Empfängerfläche optimal aus.

Da im Unterschied zum Stand der Technik auf den Empfängerflächen keine Abbildung erzeugt wird, sondern diese ausgeleuchtet werden, wird der Strahlquerschnitt der auftreffenden Teilstrahlenbündel an die Form der Empfängerfläche angepasst, und zwar unabhängig von der Geometrie der Teilabbildung, die ihrerseits durch die Umfangsgeometrie der Feldlinsen bestimmt ist.

Als Empfänger werden bevorzugt Avalanche-Photodioden verwendet, mit denen sich insbesondere kurze Lichtpulse effektiv detektieren lassen. Handelsübliche einzelne Avalanche-Photodioden haben eine runde Empfängerfläche, können aber auch mit einer quadratischen Empfängerfläche ausgeführt sein. Es gibt sie auch als fertige Arrays mit einer im Vergleich zu anderen Empfängerarrays wesentlich geringeren Anzahl von Empfängerflächen und einem wesentlich kleineren Füllfaktor. Derartige fertige Arrays können als Teilarrays für die Bildung der Empfängerarrays vorteilhaft verwendet werden.

Nachfolgend soll die Erfindung anhand von Ausführungsbeispielen und Zeichnungen näher erläutert werden.

Hierzu zeigen:
- Fig. 1a: eine Prinzipskizze eines ersten Ausführungsbeispiels einer Empfangsanordnung,
- Fig. 1b: eine perspektivische Ansicht des ersten Ausführungsbeispiels einer Empfangsanordnung gemäß Fig. 1a,
- Fig. 2: eine Prinzipskizze eines Empfangskanals des ersten Ausführungsbeispiels einer Empfangsanordnung gemäß Fig. 1a,
- Fig. 3: eine Prinzipskizze eines zweiten Ausführungsbeispiels einer Empfangsanordnung und
- Fig. 4: eine Prinzipskizze eines dritten Ausführungsbeispiels einer Empfangsanordnung.

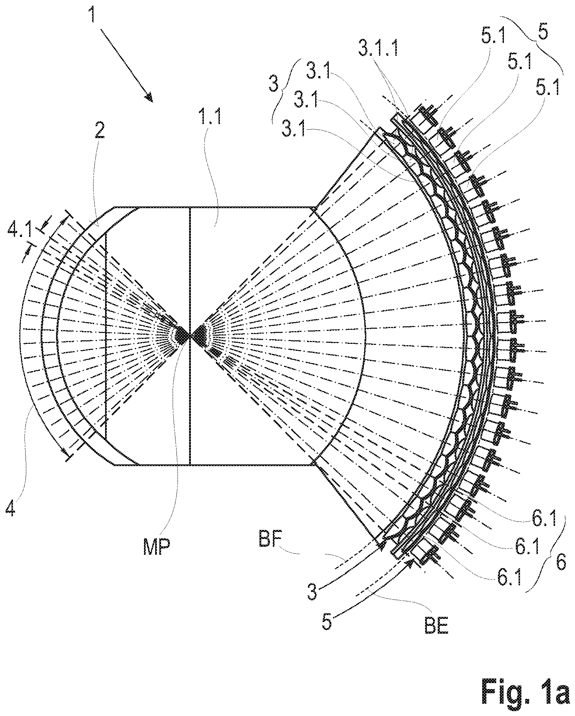

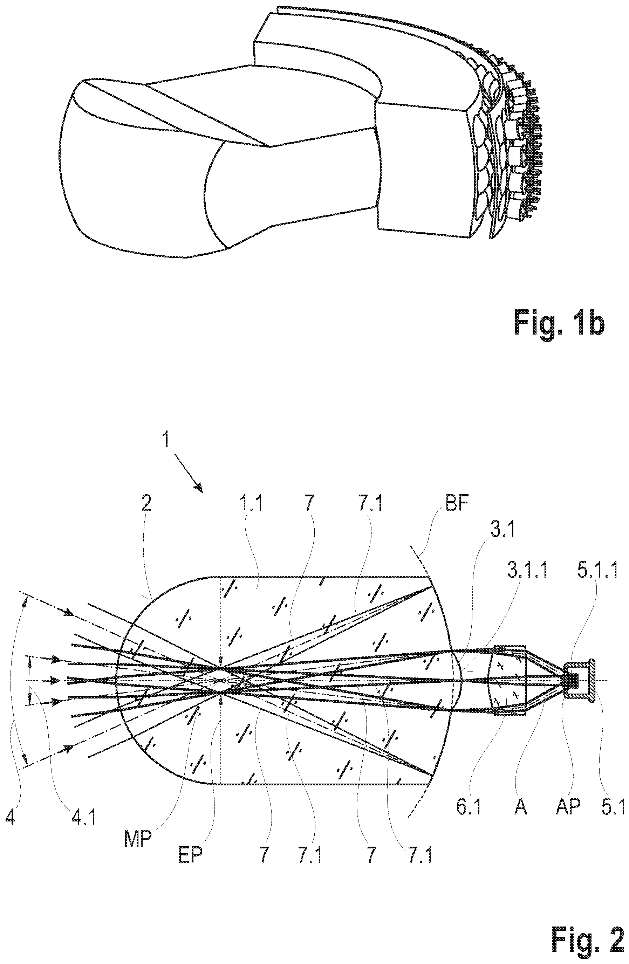

Eine erfindungsgemäße monozentrische Empfangsanordnung enthält, wie in **Fig. 1a** schematisch dargestellt, ein optisches System 1 mit einer sphärischen Eintrittsfläche 2 und einer Austrittsfläche, die durch Feldlinsenflächen 3.1.1 von Feldlinsen 3.1 eines sphärisch gekrümmten Feldlinsenarrays 3 gebildet wird, das auf einer sphärischen Fokusebene BF des optischen Systems 1 angeordnet ist. Die Krümmungsmittelpunkte der sphärischen Eintrittsfläche 2, der sphärischen Fokusebene BF und damit der Krümmung des Feldlinsenarrays 3 fallen in einem gemeinsamen Krümmungsmittelpunkt MP zusammen, weshalb das optische System 1 ein monozentrisches System darstellt. In einer den Krümmungsmittelpunkt MP einschließenden Ebene ist eine Eintrittspupille EP abgebildet, deren Mittelpunkt mit dem Krümmungsmittelpunkt MP zusammenfällt, sodass Achsstrahlen 7.1 eines jeden durch die Eintrittspupille EP gelangenden parallelen Teilstrahlenbündels 7 durch den Krümmungsmittelpunkt MP verlaufen und unbeeinflusst auf einen Punkt in der sphärischen Fokusebene BF auftreffen, in den das jeweilige Teilstrahlenbündel 7 fokussiert wird. Siehe hierzu auch **Fig. 2**, in der der Einfall mehrerer Teilstrahlenbündel 7 und ein Empfangskanal, wie er später erläutert wird, gezeigt ist. Für die Teilstrahlenbündel 7 parallelen Lichtes stellt die sphärische Fokusebene BF das Bildfeld dar. Es ist dem Fachmann klar, dass der Begriff Fokusebene hier aufgrund seiner optischen Wirkung verwendet wird und es sich dabei nicht um eine Ebene im geometrischen Sinne handelt.

Das Feldlinsenarray 3 besteht aus einer Vielzahl von Feldlinsen 3.1, deren Feldlinsenflächen 3.1.1 eine geschlossene Fläche bilden, die die Austrittsfläche des optischen Systems 1 darstellt. Bevorzugt sind sie im Umfang rechteckähnlich ausgeführt und aneinandergrenzend in Zeilen und Spalten angeordnet. Die Feldlinsen 3.1 können bedingt durch die Krümmung des Feldlinsenarrays 3 von idealen Rechtecken abweichen. Sie können vorteilhaft auch dreieckig ausgeführt sein. Da die durch die Feldlinsen 3.1 begrenzten Teilbilder nicht abgebildet werden, ist es grundsätzlich egal, welche Form die Feldlinsen 3.1 haben. Die Form kann unabhängig von der Form der Empfängerfläche 5.1.1 der Empfänger 5.1 gewählt werden, ohne dass ein Teil der Empfängerfläche 5.1.1 ungenutzt bleibt.

Durch die Form und Größe der Feldlinsen 3.1 ist jeweils ein Teilbereich 4.1 eines Objektbereiches 4 der Empfangsanordnung definiert, aus dem die Teilstrahlenbündel 7 kommend in einen der Empfangskanäle geleitet werden.

Jeder Feldlinse 3.1 sind jeweils eine Kollimatorlinse 6.1 und ein Empfänger 5.1 nachgeordnet. Sie bilden jeweils gemeinsam mit dem optischen System 1 und mit jeweils einer der daran ausgebildeten Feldlinsen 3.1 einen Empfangskanal mit jeweils einer durch den Mittelpunkt der Feldlinsenfläche 3.1.1 und den Krümmungsmittelpunkt MP verlaufenden optischen Achse A. Durch die Eintrittspupille EP hindurchtretende und in die sphärische Fokusebene BF fokussierte Teilstrahlenbündel 7 werden jeweils über eine der Kollimatorlinsen 6.1 auf denjenigen der Empfänger 5.1 kollimiert, der der Feldlinse 3.1 nachgeordnet ist, die den Bereich der sphärischen Fokusebene BF abdeckt, in den das jeweilige Teilstrahlenbündel 7 fokussiert wird. Es ist dem Fachmann klar, dass jeder Empfangskanal eine eigene Eintrittspupille aufweist. Da diese jedoch jeweils in einer Ebene entstehen, in der der Krümmungsmittelpunkt MP liegt, kann deren Lageabweichung, die auf eine Verkippung beschränkt ist, vernachlässigt werden und davon ausgegangen werden, dass die Eintrittspupillen der Empfangskanäle in einer Eintrittspupille EP der Empfangsanordnung zusammenfallen. Die Empfänger 5.1 weisen jeweils eine Empfängerfläche 5.1 auf, die in einer Ebene mit der Aperturblende AP steht. Bevorzugt stellt die Begrenzung der Empfängerfläche 5.1.1 körperlich die Aperturblende AP dar. Die Abbildung jeder der Aperturblenden AP der einzelnen Empfangskanäle stellt die Eintrittspupille EP dar.

Die Empfänger 5.1, die gemeinsam das Empfängerarray 5 bilden, sind so zueinander angeordnet, dass deren Empfängerflächen 5.1.1 auf einer sphärischen Fläche BE angeordnet sind, die einen Krümmungsmittelpunkt aufweist, der mit dem gemeinsamen Krümmungsmittelpunkt MP der sphärischen Eintrittsfläche 2 und der sphärischen Fokusebene BF zusammenfällt. Die Kollimatorlinsen 6.1 weisen dann jeweils eine gleiche Brennweite auf.

Alternativ sind die Empfänger 5.1, die gemeinsam das Empfängerarray 5 bilden oder gruppenweise jeweils ein Teilarray 5.2 bilden, so zueinander angeordnet, dass deren Empfängerflächen 5.1.1 in tangentialen Ebenen TE zu einer sphärischen Fläche BE angeordnet sind, die einen Krümmungsmittelpunkt aufweist, der mit dem gemeinsamen Krümmungsmittelpunkt MP der sphärischen Eintrittsfläche 2 und der sphärischen Fokusebene BF zusammenfällt. Die Kollimatorlinsen 6.1 weisen dann eine unterschiedliche Brennweite auf, damit die Eintrittspupille EP als Bild der Aperturblende AP bestimmungsgemäß in einer Ebene, den Krümmungsmittelpunkt MP enthaltend, für jeden der Empfangskanäle, die dem Teilarray 5.2 zugeordnet sind, entsteht.

Dadurch, dass die Abbildung der Aperturblenden AP jedes Empfangskanals zusammenfallen, weisen alle jeweils durch einen der Empfangskanäle hindurchtretenden Teilstrahlenbündel 7 in der Ebene der Empfängerfläche 5.1.1 einen gleichgroßen Bündelquerschnitt auf und alle Achsstrahlen 7.1 der durch einen der Empfangskanäle hindurchtretenden Teilstrahlenbündel 7 schneiden die optische Achse A in der Ebene der Empfängerfläche 5.1.1 dieses Empfangskanals, sodass die Teilstrahlenbündel 7 im gleichen Maße die Empfängerfläche 5.1.1 ausleuchten. Abweichungen hiervon sind toleranzbedingt möglich. Auch werden Abweichungen des Bündelquerschnitts von der Geometrie der Aperturblende AP, wie sie bei schrägem Lichteinfall entstehen, hierbei vernachlässigt.

Vorteilhaft werden Empfänger 5.1 mit einer runden Empfängerfläche 5.1.1 verwendet.

Im Unterschied zum Stand der Technik, wo Abstände zwischen den Empfängern bzw. den Empfängerflächen immer zu einem Energieverlust führen, kann hier kein Energieverlust, bedingt durch Abstände zwischen den Empfängern 5.1, entstehen, da sämtliches durch die Eintrittspupille EP einfallendes Licht auf einen der Empfänger 5.1 geführt wird.

Das optische System 1 kann für unterschiedliche Ausführungen der monozentrischen Empfangsanordnung unterschiedlich ausgeführt sein.

Entsprechend einem ersten Ausführungsbeispiel, dargestellt in **Fig. 1a**, ist das optische System 1 als monolithischer Linsenblock 1.1 ausgeführt und weist damit nur zwei optisch wirksame Grenzflächen auf, die sphärische Eintrittsfläche 2 und die durch die Feldlinsenflächen 3.1.1 der Feldlinsen 3.1 des Feldlinsenarrays 3 gebildete Austrittsfläche. Ein solches optisches System 1 ist insbesondere stabil, sowie montage- und justagefreundlich.

Eine praktische Ausführung ist in **Fig.1b** in perspektivischer Darstellung gezeigt. Die Feldlinsen 3.1 des Feldlinsenarrays 3 sind aus dem monolithischen Linsenblock 1.1 herausgearbeitet.

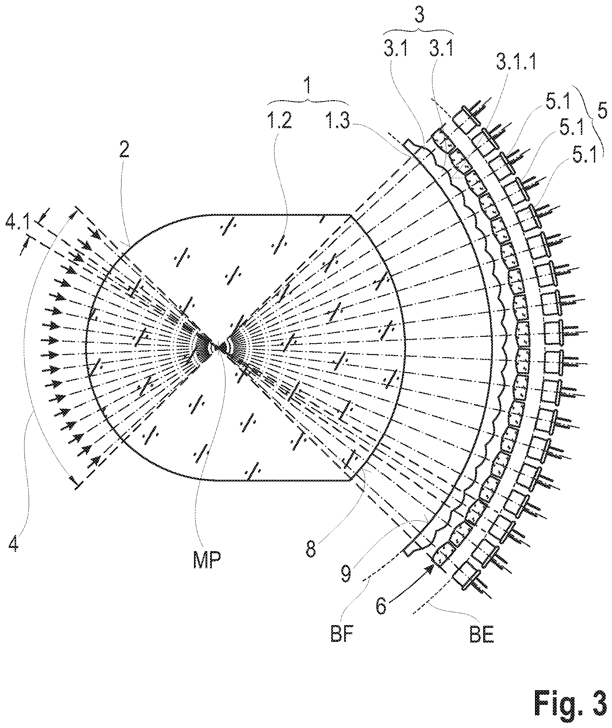

Entsprechend einem zweiten Ausführungsbeispiel, dargestellt in **Fig.3**, wird das optische System 1 aus mehreren Linsenkörpern, hier konkret durch einen ersten Linsenkörper 1.2 und einen zweiten Linsenkörper 1.3 gebildet. An dem ersten Linsenkörper 1.2 sind in Einstrahlrichtung die sphärische Eintrittsfläche 2 und eine erste sphärische Zwischenfläche 8 ausgebildet. An dem zweiten Linsenkörper 1.3 sind eine zweite sphärische Zwischenfläche 9 und die Austrittsfläche ausgebildet. Auch die Krümmungsmittelpunkte der ersten und zweiten sphärischen Zwischenflächen 8, 9 fallen mit dem gemeinsamen Krümmungsmittelpunkt MP zusammen. Der erste Linsenkörper 1.2 und der zweite Linsenkörper 1.3 weisen einen Abstand entlang der optischen Achse A auf, der so berechnet ist, dass das Feldlinsenarray 3, das hier am zweiten Linsenkörper 1.3 ausgearbeitet ist, auf der sphärischen Fokusebene BF des optischen Systems 1 angeordnet ist.

Eine solche Ausführung des optischen Systems 1 kann vorteilhaft angewendet werden, wenn die sphärische Eintrittsfläche 2 Umweltbelastungen oder der Gefahr von Beschädigungen ausgesetzt ist und austauschbar sein soll. Darüber hinaus können der erste und der zweite Linsenkörper 1.2, 1.3 aus unterschiedlichen Materialien gefertigt sein.

Die Feldlinsen 3.1 bilden zwingend ein zusammenhängendes Feldlinsenarray 3. Nur dadurch können die Feldlinsenflächen 3.1.1 lückenlos aneinandergrenzen, so dass jedes auf die sphärische Fokusebene BF fokussierte Teilstrahlenbündel 7 über einen der Empfangskanäle weitergeleitet wird.

Die Kollimatorlinsen 6.1 müssen in einem zu dem Feldlinsenarray 3 und dem Empfängerarray 5 kompatiblen Kollimatorarray 6 angeordnet sein, ohne dabei zwingend miteinander verbunden zu sein. Vorteilhaft sind auch sie, wie in **Fig.1b** beispielhaft gezeigt, monolithisch miteinander verbunden, was ihre Fassung und Fixierung vereinfacht.

Bei den in den **Fig. 1a**, **1b** und **3** gezeigten Ausführungsbeispielen sind die Kollimatorlinsen 6.1 gleich ausgeführt und die Empfängerflächen 5.1.1 der Empfänger 5.1 sind auf einer sphärischen Fläche BE angeordnet.

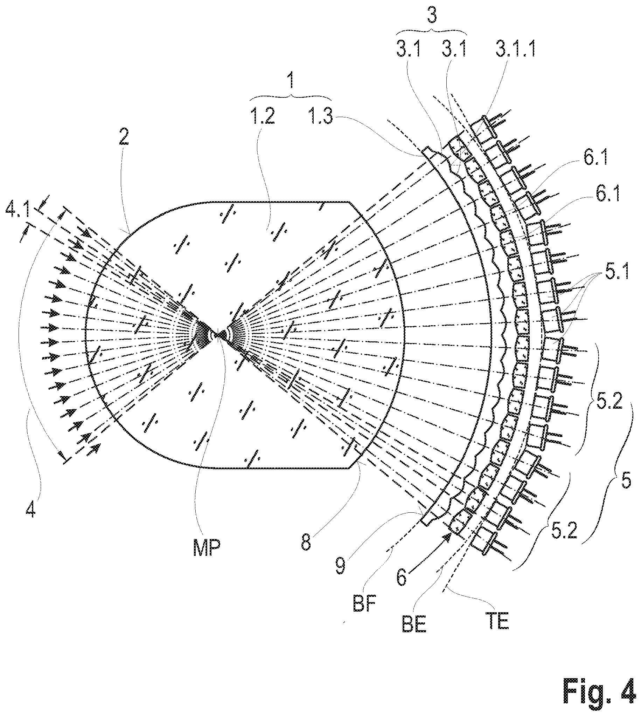

Bei einem in **Fig. 4** gezeigten dritten Ausführungsbeispiel sind die Empfängerflächen 5.1.1 von einzelnen Gruppen von Empfängern 5.1, jeweils ein Teilarray 5.2 bildend, in tangentialen Ebenen TE zu einer sphärischen Fläche BE angeordnet. Das ermöglicht als Teilarray 2.5 handelsüblich plane Arrays zu verwenden.

### Bezugszeichenliste

- 1: optisches System
- 1.1: Linsenblock
- 1.2: erster Linsenkörper
- 1.3: zweiter Linsenkörper
- 2: sphärische Eintrittsfläche
- 3: Feldlinsenarray
- 3.1: Feldlinsen
- 3.1.1: Feldlinsenfläche
- 4: Objektbereich
- 4.1: Teilbereich (des Objektbereiches 4)
- 5: Empfängerarray
- 5.1: Empfänger
- 5.2: Teilarray
- 5.1.1: Empfängerfläche
- 6: Kollimatorarray
- 6.1: Kollimatorlinse
- 7: Teilstrahlenbündel
- 7.1: Achsstrahl (des Teilstrahlenbündels 7)
- 8: erste sphärische Zwischenfläche
- 9: zweite sphärische Zwischenfläche
- EP: Eintrittspupille
- BF: sphärische Fokusebene
- BE: sphärische Fläche
- TE: tangentiale Ebene
- AP: Aperturblende
- MP: (gemeinsamer) Krümmungsmittelpunkt (der sphärischen Eintrittsfläche 2 und der sphärischen Fokusebene BF)
- A: optische Achse

## Patentansprüche

1. Monozentrische Empfangsanordnung mit einem optischen System (1), enthaltend eine sphärische Eintrittsfläche (2), eine Austrittsfläche und eine sphärische Fokusebene (BF), wobei die Krümmungsmittelpunkte der sphärischen Eintrittsfläche (2) und der sphärischen Fokusebene (BF) in einem gemeinsamen Krümmungsmittelpunkt (MP) zusammenfallen, der in der Mitte einer Eintrittspupille (EP) der Empfangsanordnung liegt, und einem dem optischen System (1) nachgeordneten optoelektronischen Empfängerarray (5), umfassend einzelne Empfänger (5.1),
wobei jeder der einzelnen Empfänger (5.1) mit dem optischen System (1) einen Empfangskanal mit jeweils einer durch den Krümmungsmittelpunkt (MP) verlaufenden optischen Achse (A) bildet,
die Austrittsfläche des optischen Systems (1) durch Feldlinsenflächen (3.1.1) von Feldlinsen (3.1) eines auf der sphärischen Fokusebene (BF) angeordneten Feldlinsenarrays (3) gebildet ist und jeweils eine der Feldlinsen (3.1) mit jeweils einer nachgeordneten Kollimatorlinse (6.1) eines Kollimatorarrays (6) einem der Empfangskanäle zugeordnet ist, **dadurch gekennzeichnet,**
**dass** durch die Eintrittspupille (EP) hindurchtretende und in die sphärische Fokusebene (BF) fokussierte Teilstrahlenbündel (7) jeweils auf denjenigen der Empfänger (5.1) kollimiert werden, der der Feldlinse (3.1) nachgeordnet ist, die den Bereich der sphärischen Fokusebene (BF) abdeckt, in den das jeweilige Teilstrahlenbündel (7) fokussiert wird, und
**dass** eine Empfängerfläche (5.1.1) eines jeden der Empfänger (5.1) eine Aperturblende (AP) verkörpert, deren Abbildung die Eintrittspupille (EP) darstellt, so dass alle durch jeweils einen der Empfangskanäle hindurchtretenden Teilstrahlenbündel (7) auf der Empfängerfläche (5.1.1) einen gleichen Bündeldurchmesser aufweisen und jeweils ein Achsstrahl (7.1) dieser Teilstrahlenbündel (7) die optische Achse (A) des Empfangskanals schneidet.

2. Monozentrische Empfangsanordnung nach Anspruch 1, **dadurch gekennzeichnet, dass** die Feldlinsen (3.1) viereckig sind und lückenlos aneinander grenzen.

3. Monozentrische Empfangsanordnung nach Anspruch 1 oder 2, **dadurch gekennzeichnet,**
**dass** das optische System (1) ein monolithischer Linsenblock (1.1) ist.

4. Monozentrische Empfangsanordnung nach Anspruch 1 oder 2, **dadurch gekennzeichnet,**
**dass** das optische System (1) aus wenigstens zwei Linsenkörpern besteht.

5. Monozentrische Empfangsanordnung nach Anspruch 4, **dadurch gekennzeichnet, dass** die wenigstens zwei Linsenkörper aus unterschiedlichen Materialien bestehen.

6. Monozentrische Empfangsanordnung nach Anspruch 4 oder 5, **dadurch gekennzeichnet,**
**dass** die wenigstens zwei Linsenkörper ein erster Linsenkörper (1.2) und ein zweiter Linsenkörper (1.3) sind, die einen Abstand zueinander aufweisen.

7. Monozentrische Empfangsanordnung nach Anspruch 1 oder 2, **dadurch gekennzeichnet,**
**dass** die Empfänger (5.1) Avalanche-Photodioden mit einer runden Empfängerfläche (5.1.1) sind.

8. Monozentrische Empfangsanordnung nach Anspruch 1 oder 2, **dadurch gekennzeichnet,**
**dass** die Kollimatorlinsen (6.1) jeweils eine gleiche Brennweite aufweisen und die Empfängerflächen (5.1.1) der das Empfängerarray (5) bildenden Empfänger (5.1) auf einer sphärischen Fläche (BE) angeordnet sind, die einen Krümmungsmittelpunkt aufweist, der mit dem gemeinsamen Krümmungsmittelpunkt (MP) der sphärischen Eintrittsfläche (2) und der sphärischen Fokusebene (BF) zusammenfällt.

9. Monozentrische Empfangsanordnung nach Anspruch 1 oder 2, **dadurch gekennzeichnet,**
**dass** die Kollimatorlinsen (6.1) unterschiedliche Brennweiten aufweisen und die Empfängerflächen (5.1.1) der das Empfängerarray (5) bildenden Empfänger (5.1) oder gruppenweise die Empfängerflächen (5.1.1) der jeweils ein Teilarray (5.2) bildenden Empfänger (5.1) in tangentialen Ebenen (TE) zu einer sphärischen Fläche (BE) angeordnet sind, die einen Krümmungsmittelpunkt aufweist, der mit dem gemeinsamen Krümmungsmittelpunkt (MP) der sphärischen Eintrittsfläche (2) und der sphärischen Fokusebene (BF) zusammenfällt.

## Claims

1. A monocentric reception arrangement, comprising an optical system (1) having a spherical entrance surface (2), an exit surface and a spherical focal plane (BF), wherein the centres of curvature of the spherical entrance surface (2) and of the spherical focal plane (BF) coincide in a common centre of curvature (MP), which is located in the centre of an entrance pupil (EP) of the reception arrangement, and further comprising an optoelectronic receiver array (5) arranged downstream of the optical system (1), said receiver array (5) comprising individual receivers (5.1),
wherein each of the individual receivers (5.1) and the optical system (1) together form a reception channel with in each case one optical axis (A) passing through the centre of curvature (MP),
the exit surface of the optical system (1) is formed by field lens surfaces (3.1.1) of field lenses (3.1) of a field lens array (3) arranged on the spherical focal plane (BF), and in each case one of the field lenses (3.1), with a respective downstream collimator lens (6.1) of a collimator array (6), is assigned to one of the reception channels, **characterised in that** partial beams (7) passing through the entrance pupil (EP) and focused into the spherical focal plane (BF) are each directed onto that one of the receivers (5.1) which is arranged downstream of the field lens (3.1) covering the area of the spherical focal plane (BF) into which the respective partial beam (7) is focused, and
**in that** a receiver surface (5.1.1) of each of the receivers (5.1) embodies an aperture stop (AP), the image of which represents the entrance pupil (EP), so that all partial beams (7) on the receiver surface (5.1.1) passing through a respective one of the reception channels have the same beam diameter and one axial beam (7.1) each of these partial beams (7) intersects the optical axis (A) of the reception channel.

2. The monocentric reception arrangement according to claim 1, **characterised in that** the field lenses (3.1) are quadrangular and adjoin one another without gaps.

3. The monocentric reception arrangement according to claim 1 or 2,
**characterised in that**
the optical system (1) is a monolithic lens block (1.1).

4. The monocentric reception arrangement according to claim 1 or 2,
**characterised in that**
the optical system (1) consists of at least two lens bodies.

5. The monocentric reception arrangement according to claim 4, **characterised in that** the at least two lens bodies consist of different materials.

6. The monocentric reception arrangement according to claim 4 or 5,
**characterised in that**
the at least two lens bodies are a first lens body (1.2) and a second lens body (1.3) which are spaced apart from one another.

7. The monocentric reception arrangement according to claim 1 or 2,
**characterised in that**
the receivers (5.1) are avalanche photodiodes with a round receiver surface (5.1.1).

8. The monocentric reception arrangement according to claim 1 or 2,
**characterised in that**
the collimator lenses (6.1) each have an identical focal length and the receiver surfaces (5.1.1) of the receivers (5.1) forming the receiver array (5) are arranged on a spherical surface (BE) which has a centre of curvature that coincides with the common centre of curvature (MP) of the spherical entrance surface (2) and the spherical focal plane (BF).

9. The monocentric reception arrangement according to claim 1 or 2,
**characterised in that**
the collimator lenses (6.1) have different focal lengths and the receiver surfaces (5.1.1) of the receivers (5.1) forming the receiver array (5) or, in groups, the receiver surfaces (5.1.1) of the respective subarrays (5.1.1) are arranged in tangential planes (TE) to a spherical surface (BE) which has a centre of curvature that coincides with the common centre of curvature (MP) of the spherical entrance surface (2) and the spherical focal plane (BF).

## Revendications

1. Dispositif de réception monocentrique comprenant un système optique (1) qui présente une surface d'entrée sphérique (2), une surface de sortie et un plan focal sphérique (BF), les centres de courbure de la surface d'entrée sphérique (2) et du plan focal sphérique (BF) coïncidant en un centre de courbure commun (MP) qui se trouve au centre d'une pupille d'entrée (EP) du dispositif de réception, et comprenant en outre un réseau de récepteurs optoélectroniques (5) disposé en aval du système optique (1), comprenant des récepteurs individuels (5.1),
dans lequel dispositif chacun des récepteurs individuels (5.1) forme avec le système optique (1) un canal de réception avec un axe optique respectif (A) s'étendant à travers le centre de courbure (MP),
la surface de sortie du système optique (1) est formée par des surfaces de lentilles de champ (3.1.1) de lentilles de champ (3.1) d'un réseau de lentilles de champ (3) disposé sur le plan focal sphérique (BF), et à chaque fois l'une des lentilles de champ (3.1) avec une lentille collimatrice (6.1) respective, disposée en aval, d'un réseau de collimateurs (6) est associée à l'un des canaux de réception, **caractérisé en ce que**
des faisceaux partiels (7) qui traversent la pupille d'entrée (EP) et qui sont focalisés dans le plan focal sphérique (BF) sont collimatés sur celui des récepteurs (5.1) qui est disposé en aval de la lentille de champ (3.1) qui couvre la zone du plan focal sphérique (BF) dans laquelle le faisceau partiel (7) respectif est focalisé, et
**en ce qu'**une surface réceptrice (5.1.1) de chacun des récepteurs (5.1) présente un limiteur d'ouverture (AP) dont l'image représente la pupille d'entrée (EP), de sorte que tous les faisceaux partiels (7) traversant chacun l'un des canaux de réception présentent un diamètre de rayon identique sur la surface réceptrice (5.1.1) et qu'un rayon axial (7.1) respectif de ces faisceaux partiels (7) coupe l'axe optique (A) du canal de réception.

2. Dispositif de réception monocentrique selon la revendication 1, **caractérisé en ce que** les lentilles de champ (3.1) sont quadrangulaires et se rejoignent sans interstice.

3. Dispositif de réception monocentrique selon la revendication 1 ou 2, **caractérisé en ce que**
le système optique (1) est un bloc de lentilles monolithique (1.1).

4. Dispositif de réception monocentrique selon la revendication 1 ou 2, **caractérisé en ce que**
le système optique (1) est constitué d'au moins deux corps de lentille.

5. Dispositif de réception monocentrique selon la revendication 4, **caractérisé en ce que** les au moins deux corps de lentille sont faits de matériaux différents.

6. Dispositif de réception monocentrique selon la revendication 4 ou 5,
**caractérisé en ce que**
les au moins deux corps de lentille sont un premier corps de lentille (1.2) et un deuxième corps de lentille (1.3) qui sont espacés l'un de l'autre.

7. Dispositif de réception monocentrique selon la revendication 1 ou 2,
**caractérisé en ce que**
les récepteurs (5.1) sont des photodiodes à avalanche avec une surface réceptrice ronde (5.1.1).

8. Dispositif de réception monocentrique selon la revendication 1 ou 2,
**caractérisé en ce que**
les lentilles collimatrices (6.1) ont chacune une longueur focale égale et les surfaces réceptrices (5.1.1) des récepteurs (5.1) formant le réseau de récepteurs (5) sont disposées sur une surface sphérique (BE) qui a un centre de courbure qui coïncide avec le centre de courbure commun (MP) de la surface d'entrée sphérique (2) et du plan focal sphérique (BF).

9. Dispositif de réception monocentrique selon la revendication 1 ou 2,
**caractérisé en ce que**
les lentilles collimatrices (6.1) ont des distances focales différentes et que les surfaces réceptrices (5.1.1) des récepteurs (5.1) formant le réseau de récepteurs (5) ou, par groupes, les surfaces réceptrices (5.1.1) des récepteurs (5.2) formant chacun un réseau partiel (5.2) sont disposées dans des plans tangentiels (TE) à une surface sphérique (BE) qui a un centre de courbure qui coïncide avec le centre de courbure commun (MP) de la surface d'entrée sphérique (BE) et du plan focal sphérique (BF).
